# EUROPÄISCHE PATENTSCHRIFT

(11) **EP 1 026 127 B1**
(45) Veröffentlichungstag und Bekanntmachung des Hinweises auf die Patenterteilung: **13.08.2003**
(21) Anmeldenummer: 99120579.0
(22) Anmeldetag: 16.10.1999
(51) Int. Cl.: C03B 9/453

(54) **Vorrichtung zum Überschieben hohler Glasgegenstände auf ein Transportband**
Apparatus for pushing hollow glassware on a transportbelt
Appareil pour pousser des objets creux en verre sur une bande transporteuse

(30) Priorität: 06.02.1999 DE 29902149 U
(43) Veröffentlichungstag der Anmeldung: 09.08.2000
(73) Patentinhaber: Heye International GmbH, 31683 Obernkirchen (DE)
(72) Erfinder: Malek, Raimund, 31749 Auetal (DE)
(74) Vertreter: Callies, Rainer

(56) Entgegenhaltungen:
- WO-A-97/26220
- GB-A- 2 292 551
- US-A- 4 927 444
- US-A- 5 733 354

## Beschreibung

Die Erfindung betrifft eine Vorrichtung gemäß dem Oberbegriff des Anspruchs 1.

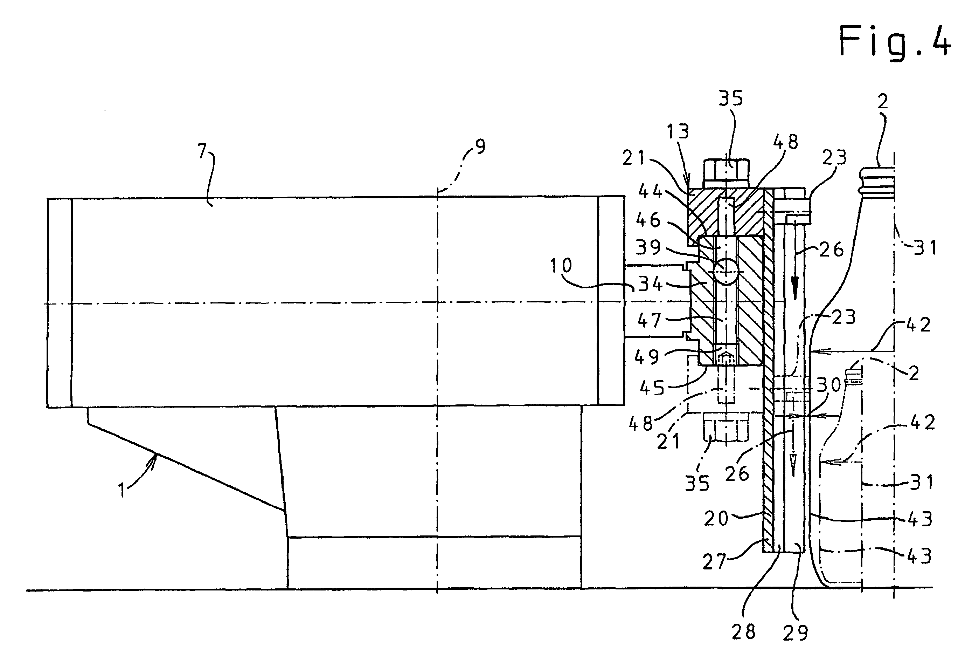

Bei einer bekannten Vorrichtung dieser Art (US 5 527 372 A) wird ein Luftstrahl exzentrisch auf den Hacken einer Flasche gerichtet, so daß der größere Teil des Luftstroms die Flasche im Uhrzeigersinn (Fig. 4) durch die Ecke der Tasche des Überschiebers umströmt, während der kleinere Teil des Luftstroms die Flasche im Gegenuhrzeigersinn umströmt. Die Düsenöffnung für den Druckluftstrahl befindet sich unten am freien Ende jedes Fingers des Überschiebers. Eine Schubstütze am Finger endet oberhalb der Düsenöffnung. Dennoch wird sich die aus der Düsenöffnung austretende Druckluft auch nach oben hin zwischen die Schubstütze und die Flasche ausdehnen. Das hat zur Folge, daß die Flasche bei der bekannten Vorrichtung weder an der Schubstütze noch an der Anlagestütze der Seitenwand ständig anliegt. Entsprechend unsicher ist die Positionierung der Flasche auf dem Transportband. Der Luftverbrauch ist ferner verhältnismäßig groß. weil Druckluft rings um die Flasche herum strömt. Der Weg der Druckluft bis in das freie Ende des Fingers ist verhältnismäßig lang und verwinkelt. Daraus ergeben sich entsprechende Druckverluste.

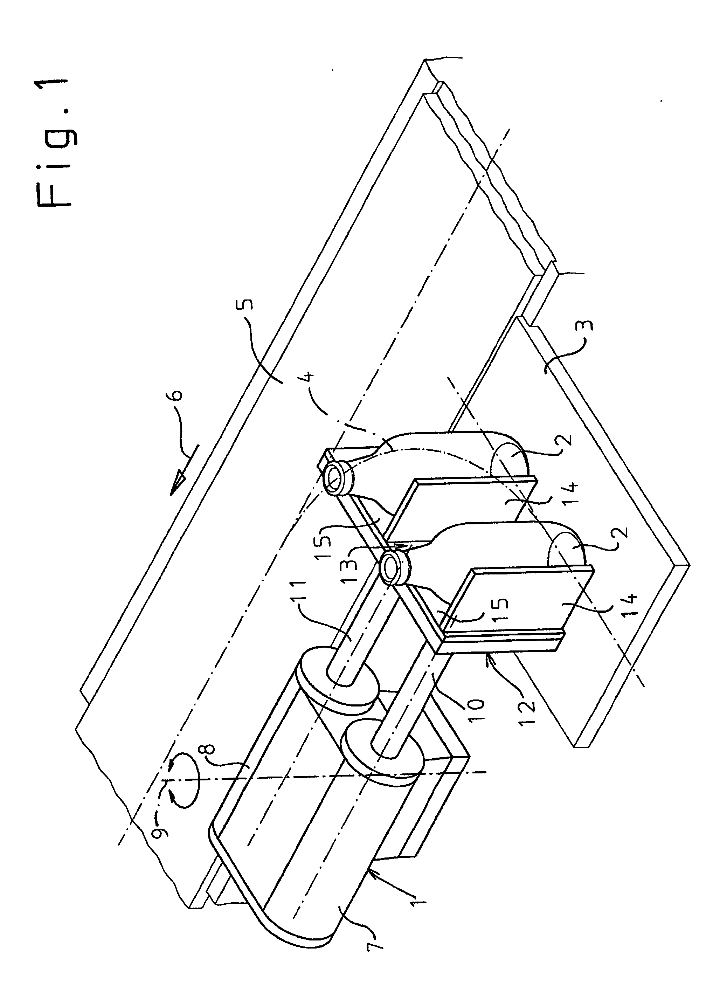

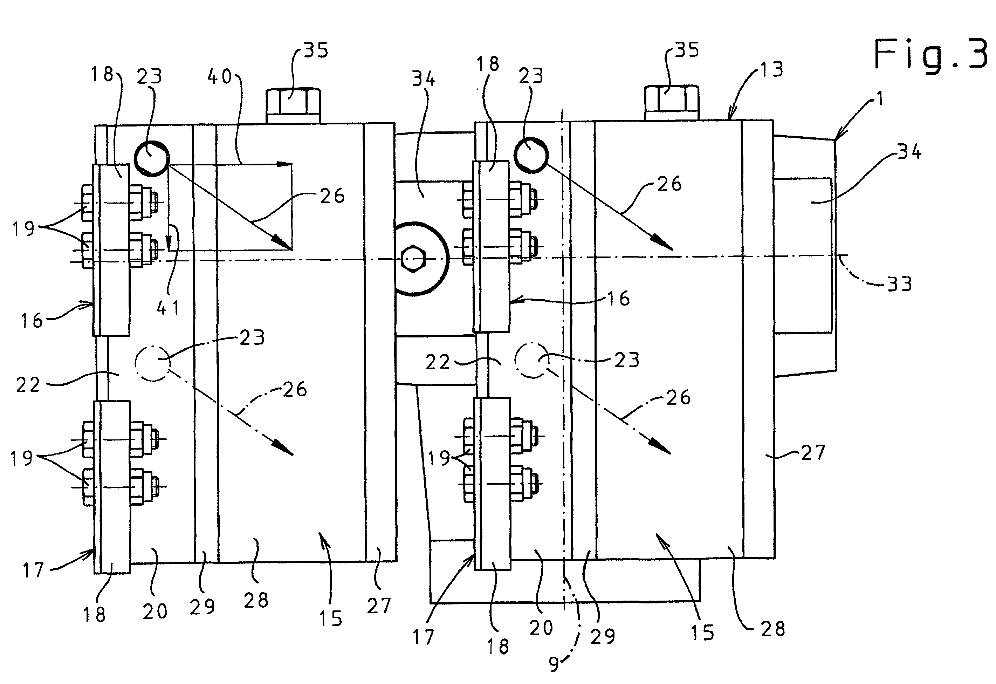

Aus der WO 97/26220 A1 sind eine Reihe von Ausführungsformen an sich bekannt, die alle mit der Sogwirkung eines aus einer Düse austretenden Druckluftstrahls zu tun haben. In den Fig. 1 und 3 handelt es sich dabei um kreisrunde Düsen, wobei es sich bei der Düse in Fig. 3 auch um eine Schlitzdüse handeln kann, ähnlich der Schlitzdüse in Fig. 14. Das Prinzip ist dieser Druckschrift den Fig. 14 bis 17 zu entnehmen. Die Druckluft wird in einer Hauptwand des Überschiebers durch einen Kanal zugeführt und tritt in der Regel unter einem Winkel zur Hauptebene der Hauptwand aus einem Düsenschlitz aus. Dieses schräge Austreten hat ein Anlegen der Luftströmung an die Anlagestütze zur Folge. wie dies besonders deutlich in Fig. 15 dargestellt ist. Die Druckschrift beschreibt dies als den sogenannten Coanda-Effekt (siehe Seite 10, Zeile 24 bis 29). In jedem Fall wird etwa aus der waagerechten Mitte der Hauptwand jeder Tasche in Richtung derjenigen Ecke der Tasche geblasen, in die sich die Flasche legen soll. Dieses Blasen in die Flaschenecke hat zur Folge, daß dort Turbulenzen und Luftstau entstehen würden, wenn man nicht gemäß Fig. 14 eine Absaugöffnung im zugehörigen Finger vorsehen würde.

Der Erfindung liegt die Aufgabe zugrunde, den baulichen Aufwand und den Druckluftverbrauch zu senken. Dennoch soll verhindert werden, daß der Glasgegenstand sich bei hohen Winkelgeschwindigkeiten (hohen Transportgeschwindigkeiten oder großem Bahnradius des äußeren Glasgegenstands bei Mehrfachformmaschinen) ungewollt von dem Überschieber löst, bevor der übergeschobene Glasgegenstand seine Endposition auf dem Transportband erreicht hat. Ein solches vorzeitiges Lösen des Glasgegenstands aus der Sollposition würde zu Transportfehlern führen.

Diese Aufgabe ist durch die Merkmale des Anspruchs 1 gelöst. Die Vorrichtung eignet sich insbesondere zum gleichzeitigen Überschieben von zwei oder mehr Glasgegenständen, die insbesondere in einer Sektion einer I.S.(Individual Section)-Glasformmaschine hergestellt wurden. Das Transportband läuft dann entlang aller Sektionen der I.S.-Glasformmaschine. Vorzugsweise werden Düsen mit einer Bohrung von ca. 2 mm Durchmesser und Druckluft von etwa 2,0 bis 2,5 bar verwendet. Es empfiehlt sich, die Druckluft getaktet zuzuführen, also nur während desjenigen Teils des Überschiebezyklus, in dem anderenfalls die Gefahr bestünde, daß sich der Glasgegenstand in unerwünschter Weise aus seiner Tasche des Überschiebers löst. Die Anordnung der Düse im Bereich der Ecke der zugehörigen Tasche des Überschiebers hat den Vorteil, daß die Druckluft aus dieser Ecke heraus geblasen wird. In der Ecke kann es daher nicht zu Turbulenzen und Luftstau kommen. Eine Absaugung der Druckluft aus der Ecke ist damit überflüssig. Ferner ist für eine positionsgenaue Abgabe des Glasgegenstands an das Transportband der Zeitpunkt der Abschaltung der Druckluft nicht mehr kritisch. Der Luftverbrauch ist geringer, weil die Druckluft den Glasgegenstand nicht mehr rings umströmt, sondern nur noch zwischen dem Basisteil und dem Glasgegenstand hindurchströmt.

Gemäß Anspruch 2 ergeben sich besonders kurze Zuleitungswege für die Druckluft bis zur Düse.

Die Merkmale des Anspruchs 3 gestatten es, für jede axiale Länge des Glasgegenstands die optimale Höhenanordnung für die Düse zu wählen.

Gemäß Anspruch 4 ergibt sich eine optimale Nutzung der Druckluft für die Erzielung der gewünschten Sogwirkung zwischen dem Basisteil und dem Glasgegenstand.

Die Merkmale des Anspruchs 5 führen zu besonders geringem Druckluftverbrauch bei guter Sogwirkung.

Gemäß Anspruch 6 bildet sich zwischen dem Basisteil und dem Glasgegenstand ein mehr oder minder großer Spalt aus, dessen Größe jedoch sehr gut kontrollierbar ist. Der Spalt kann allenfalls einen Einfluß auf die letztliche Positionierung des Glasgegenstands quer zur Längsachse des Transportbands auf dem Transportband haben. Der Vorteil der Blasrichtung gemäß Anspruch 6 liegt in einer besonders guten Ausnutzung der Druckluft zur Erzielung einer ausreichenden Sogwirkung.

Während des Überschiebens liegt der Glasgegenstand an seinem wenigstens einen Schubfinger an. Dies führt zu einer definierten Position des Glasgegenstands in der Längsrichtung des Transportbands.

Durch die Merkmale des Anspruchs 7 ist eine sehr wirksame und flexible Versorgung der Düsen mit Druckluft ermöglicht.

Gemäß Anspruch 8 nehmen die Schubfinger an eventuellen Einstellbewegungen des Kupplungsstücks teil. Dadurch ist eine gesonderte Justage der Schubfinger überflüssig.

Die Merkmale des Anspruchs 9 gestatten die Einstellung der Schubfinger benachbarter Taschen auf den Abstand der Längsachsen benachbarter Glasgegenstände voneinander.

Diese und weitere Merkmale und Vorteile der Erfindung werden nachfolgend anhand der in den Zeichnungen dargestellten Ausführungsbeispiele näher erläutert. Es zeigt
Fig. 1 eine perspektivische, schematische Darstellung einer Überschiebevorrichtung,
Fig. 2 die Draufsicht auf einen Teil einer Überschiebevorrichtung, teilweise im Schnitt,
Fig. 3 die Ansicht gemäß Linie III-III in Fig. 2 und
Fig. 4 die teilweise geschnittene Ansicht gemäß Linie IV-IV in Fig. 2.

Fig. 1 zeigt eine Vorrichtung 1 zum gleichzeitigen Überschieben zweier hohler Glasgegenstände 2 von einer Absetzplatte 3 einer nicht weiter dargestellten Glasformmaschine entlang einer gekrümmten Bahn 4 auf ein Transportband 5. Das Transportband 5 läuft in an sich bekannter Weise mit konstanter Geschwindigkeit in Richtung eines Pfeils 6 und nimmt nacheinander die Glasgegenstände 2 mehrerer Sektionen einer I.S.-Glasformmaschine auf Lücke auf.

Die Vorrichtung 1 weist zueinander parallele, waagerecht angeordnete Kolben-Zylinder-Einheiten 7 und 8 auf, die um eine senkrechte Achse 9 während eines Überschiebezyklus hin und her schwenkbar sind. An Kolbenstangen 10 und 11 der Kolben-Zylinder-Einheiten 7, 8 ist ein Überschieber 12 befestigt. Der Überschieber 12 weist ein sich quer zu den Kolbenstangen 10, 11 erstreckendes Basisteil 13 und für jeden überzuschiebenden Glasgegenstand 2 einen sich quer von dem Basisteil 13 erstreckenden Schubfinger 14 auf. Jeder Schubfinger 14 definiert mit dem Basisteil 13 eine Tasche 15 zur Aufnahme des zugehörigen Glasgegenstands 2.

Die Kolbenstangen 10, 11 werden mit dem Überschieber 12 ausgefahren, bis sie die in Fig. 1 gezeigte Überschiebeposition erreicht haben. Anschließend werden die fertigen Glasgegenstände 2, 2 auf der Absetzplatte 3 abgesetzt. Sodann wird die Vorrichtung 1 um die senkrechte Achse 9 im Gegenuhrzeigersinn geschwenkt, bis die Glasgegenstände 2, 2 ihre Position auf dem Transportband 5 eingenommen haben. In diesem Augenblick werden die Kolbenstangen 10, 11 wieder eingezogen und die Vorrichtung 1 um die senkrechte Achse 9 in ihre Startposition zurückgeschwenkt.

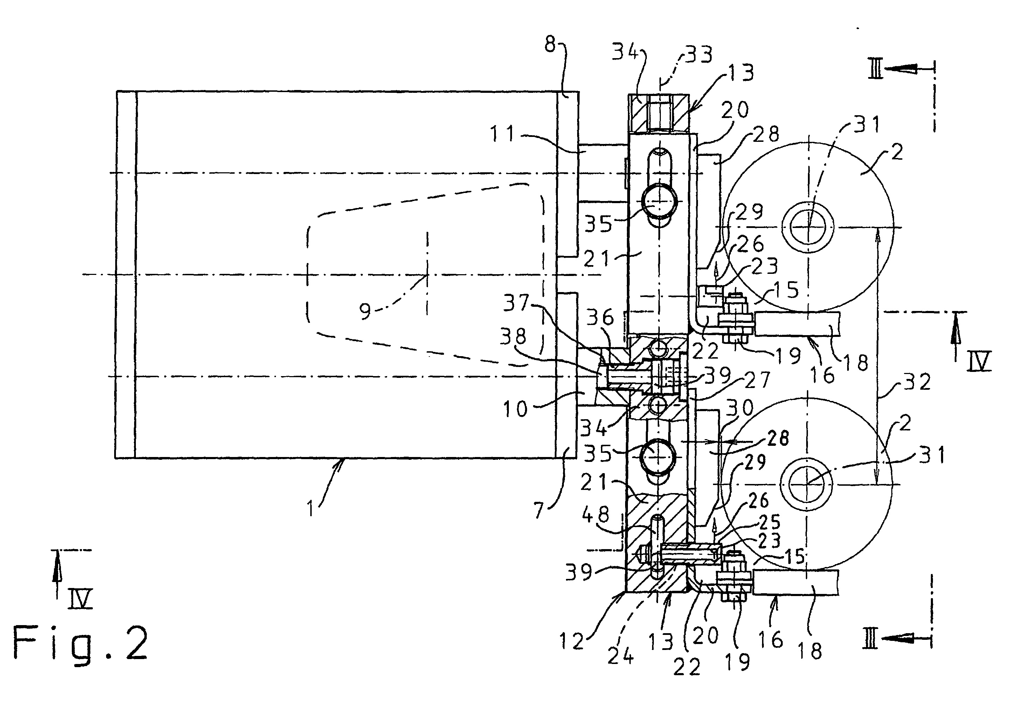

Bei dem Ausführungsbeispiel gemäß Fig. 2 weist der Überschieber 12 wiederum zwei Taschen 15, 15 auf. Grundsätzlich kann der Überschieber 12 nur eine solche Tasche 15, zwei Taschen 15 oder auch mehr als zwei solche Taschen 15 besitzen. Beim sogenannten Dreifachformbetrieb, bei dem also in jeder Sektion der I.S.-Glasformmaschine gleichzeitig drei Glasgegenstände 2 hergestellt werden, hätte der Überschieber 12 demnach drei Taschen 15. Jede dieser Taschen 15 wird gemäß Fig. 2 durch einen oberen Schubfinger 16 und gemäß Fig. 3 durch einen zusätzlichen unteren Schubfinger 17 begrenzt. Jeder Schubfinger 16, 17 ist mit einer Schubstütze 18 versehen. Jede Schubstütze 18 besteht in an sich bekannter Weise aus einem Material, das die noch heißen Glasgegenstände 2 möglichst gut schont. Dies ist von Bedeutung, weil während des Überschiebens die Glasgegenstände 2 in der in Fig. 2 angedeuteten Weise in Berührung mit den Schubstützen 18 stehen.

Jeder Schubfinger 16, 17 ist mit zwei Schrauben 19 an einem von oben nach unten durchgehenden Tragwinkel 20 befestigt, der seinerseits an einem Kupplungsstück 21 angeschweißt ist.

Im Bereich einer Ecke 22 jeder Tasche 15 ist eine Düse 23 angeordnet, die gemäß Fig. 2 durch eine Bohrung des Tragwinkels 20 hindurchgesteckt und in eine Gewindebohrung 24 des Kupplungsstücks 21 eingeschraubt ist. Aus einer Düsenbohrung 25 der Düse 23 ist Druckluft in Richtung eines Pfeils 26 parallel zu dem Basisteil 13 aus der zugehörigen Ecke 22 heraus und schräg nach unten (Fig. 3) ausblasbar. Die Druckluft muß nicht unbedingt schräg nach unten ausgeblasen werden. In vielen Fällen kann auch eine waagerechte Ausblasung genügen.

Ein zu dem Basisteil 13 paralleler Schenkel 27 des Tragwinkels 20 ist auf seiner ganzen Höhe mit einer Anlagestütze 28 versehen, die aus dem gleichen Material wie die Schubstützen 18 bestehen kann. Jede Anlagestütze 28 weist an ihrer der Düse 23 zugewandten Seite eine Fase 29 auf, die von oben bis unten durchgeht. Die Fase 29 bildet mit der gegenüberliegenden Wand des Glasgegenstands 2 gewissermaßen einen Trichter zur Aufnahme der Druckluft 26. Durch die Druckluft entsteht zwischen der Anlagestütze 28 und dem Glasgegenstand 2 ein Spalt 30, dessen Größe vom Druck und der Menge der Druckluft 26 abhängt und damit einstellbar ist. Die Druckluft 26 erzeugt in dem Raum zwischen der Anlagestütze 28 und dem Glasgegenstand 2 einen Unterdruck, der den Glasgegenstand 2 in Richtung der Anlagestütze 28 saugt. Dadurch wird der Glasgegenstand 2 während des Überschiebens in der Tasche 15 gehalten. Am Ende des Überschiebens kann die Druckluft 26 abgeschaltet werden und abgeschaltet bleiben, bis ein neues Überschieben beginnt.

Die Glasgegenstände 2 weisen jeweils eine Längsachse 31 auf. Der Abstand 32 der Längsachsen 31 benachbarter Glasgegenstände 2 auf der Absetzplatte 3 liegt durch die konstruktiven Daten der zugehörigen Glasformmaschine fest. Normalerweise wird dieser Abstand 32 auch auf dem Transportband 5 (Fig. 1) beibehalten. Das bedeutet, daß die geraden Schubfinger 14, 16, 17 auf den Abstand 32 eingestellt werden müssen. Dies geschieht gemäß der Erfindung schnell und sicher dadurch, daß jedes Kupplungsstück 21 in den Richtungen einer Längsachse 33 einer waagerechten Tragschiene 34 relativ zu der Tragschiene 34 einstellbar ist. Die jeweilige Einstellung wird durch eine Fixierschraube 35 fixiert. Die Tragschiene 34 ist mit den freien Enden der Kolbenstangen 10, 11 verschraubt. Dies geschieht hinsichtlich der Kolbenstange 10 in Fig. 2 durch einen Schraubstutzen 36, der mit einem Kopf in eine Haltebohrung der Tragschiene 34 und mit einem Gewindeende in eine Gewindebohrung 37 einer mit Druckluft beaufschlagbaren Längsbohrung 38 der Kolbenstange 10 eingreift. Die Druckluft gelangt aus der Längsbohrung 38 durch den Schraubstutzen 36 in Versorgungskanäle 39 der Tragschiene 34. Die Versorgungskanäle 39 speisen die Düsen 23 in der aus Fig. 2 ersichtlichen Weise mit der Druckluft 26. Die Versorgungskanäle 39 für beide Kupplungsstücke 21 gemäß Fig. 2 können gemeinsam aus der Längsbohrung 38 der Kolbenstange 10 mit Druckluft versorgt werden.

Aus Fig. 3 ist zu erkennen, daß in diesem Ausführungsbeispiel jeder Druckluftstrahl 26 schräg nach unten geneigt ist und eine waagerechte Komponente 40 sowie eine senkrecht nach unten gerichtete Komponente 41 aufweist. So wird die Druckluft 26 also aus der jeweiligen Ecke 22 heraus schräg nach unten ausgeblasen.

In Fig. 3 sind die beiden oberen Druckluftstrahlen 26 mit vollausgezogenen Pfeilen eingezeichnet. Die Einbausituation der zugehörigen Düsen 23 entspricht der vollausgezogenen Darstellung in Fig. 4 und wird für das Überschieben verhältnismäßig hoher Glasgegenstände 2 verwendet, wie einer in Fig. 4 mit vollausgezogenen Linien angedeutet ist. Zwischen diesen hohen Glasgegenstand 2 und das Basisteil 13 wird aus der oben an dem Tragwinkel 20 montierten Düse 23 derart Druckluft geblasen, daß die Druckluft in Richtung eines Höhenbereichs der Vorrichtung 1 strömt, in dem ein eine maximale Querdimension 42 aufweisender zylindrischer Teil 43 des Glasgegenstands 2 angeordnet ist. Dadurch bildet sich zwischen der Anlagestütze 28 und dem zylindrischen Teil 43 der vorerwähnte Spalt 30 aus. Bei diesen hohen Glasgegenständen 2 werden in jeder Tasche 15 die beiden im Abstand übereinander montierten Schubfinger 16, 17 verwendet.

In den Fig. 3 und 4 ist außerdem die Einbausituation für kürzere Glasgegenstände 2 in strickpunktierten Linien eingezeichnet. Dann wird die Düse 23, wie Fig. 3 zu entnehmen ist, etwa auf der Höhenmitte der Tragwinkel 20 montiert, wobei der Druckluftstrahl 26 wiederum schräg nach unten, aus der Ecke 22 heraus und im wesentlichen parallel zu dem Basisteil 13 gerichtet ist. Für diesen Betriebsfall mit den verhältnismäßig kurzen Glasgegenständen 2 kann man die oberen Schubfinger 16 abmontieren.

Gemäß Fig. 4 weist die Tragschiene 34 eine obere Anschlußfläche 44 und eine untere Anschlußfläche 45 auf. Von den Versorgungskanälen 39 erstreckt sich für jeden Schubfinger 14, 16, 17 ein oberer Stichkanal 46 bis in die obere Anschlußfläche 44 und ein unterer Stichkanal 47 bis in die untere Anschlußfläche 45. Bei den verhältnismäßig hohen, mit vollausgezogenen Linien dargestellten Glasgegenständen 2 ist gemäß Fig. 4 das Kupplungsstück 21 auf der oberen Anschlußfläche 44 montiert und steht mit einem als Längsschlitz ausgebildeten Verbindungskanal 48, unabhängig von seiner Längseinstellung, in ständiger Verbindung mit dem oberen Stichkanal 46. Fig. 2 verdeutlicht, wie jeder Verbindungskanal 48 seinerseits in ständiger Verbindung mit der zugehörigen Düse 23 steht.

Wenn dagegen die in Fig. 4 strichpunktiert eingezeichneten, verhältnismäßig kurzen Glasgegenstände 2 übergeschoben werden sollen, wird ein Blindstopfen 49 aus einer unteren Gewindebohrung des unteren Stichkanals herausgeschraubt und in eine entsprechende Gewindebohrung oben in dem oberen Stichkanal 46 eingeschraubt, nachdem das Kupplungsstück 21 von der oberen Anschlußfläche 44 abgenommen wurde. Sodann wird ein in Fig. 4 strichpunktiert eingetragenes Kupplungsstück 21 an die untere Anschlußfläche 45 montiert, so daß dessen Verbindungskanal 48 in ständiger Verbindung mit dem unteren Stichkanal 47 steht. Die in Fig. 4 strichpunktierte Düse 23 nimmt dann die auch in Fig. 3 strichpunktierte tiefere Betriebsstellung für die kurzen Glasgegenstände 2 ein. Der Tragwinkel 20 kann entsprechend verkürzt sein und erst auf der Höhe der unteren Anschlußfläche 45 beginnen und sich nach unten erstrecken. Der Tragwinkel 20 trägt dann nur einen unteren Schubfinger 17 gemäß Fig. 3.

## Patentansprüche

1. Vorrichtung (1) zum Überschieben wenigstens eines hohlen Glasgegenstands(2) von einer Absetzplatte (3) einer Glasformmaschine entlang einer gekrümmten Bahn (4) auf ein Transportband (5),
mit einem Überschieber (12), der ein Basisteil (13) und für jeden überzuschiebenden Glasgegenstand (2) wenigstens einen, sich quer von dem Basisteil (13) erstreckenden Schubfinger (14;16,17) aufweist.
wobei jeder Schubfinger (14;16,17) mit dem Basisteil (13) eine Tasche (15) zur Aufnahme des Glasgegenstands (2) definiert,
wobei der Überschieber (12) für jede Tasche (15) eine Düse (23) aufweist,
und wobei aus jeder Düse (23) Druckluft (26) derart blasbar ist. daß zwischen dem Überschieber (12) und dem Glasgegenstand (2) ein den Glasgegenstand (2) in die Tasche (15) ziehender Unterdruck entsteht,
**dadurch gekennzeichnet, daß** jede Düse (23) im Bereich einer zwischen dem Schubfinger (14; 16, 17) und dem Basisteil (13) gebildeten Ecke (22) der zugehörigen Tasche (15) angeordnet ist,
und daß die Druckluft (26) aus dieser Ecke (22) heraus zwischen das Basisteil (13) und den Glasgegenstand (2) blasbar ist.

2. Vorrichtung nach Anspruch 1, **dadurch gekennzeichnet, daß** die Düse (23) an dem Basisteil (13) montiert ist.

3. Vorrichtung nach Anspruch 1 oder 2,
**dadurch gekennzeichnet, daß** die Düse (23) in Abhängigkeit von der axialen Länge des Glasgegenstands (2) in unterschiedlichen Höhen des Überschiebers (12) montierbar ist.

4. Vorrichtung nach einem der Ansprüche 1 bis 3,
**dadurch gekennzeichnet, daß** aus jeder Düse (23) die Druckluft (26) schräg nach unten blasbar ist.

5. Vorrichtung nach einem der Ansprüche 1 bis 4,
**dadurch gekennzeichnet, daß** aus jeder Düse (23) die Druckluft (26) zumindest annähernd parallel zu dem Basisteil (13) ausblasbar ist.

6. Vorrichtung nach einem der Ansprüche 1 bis 5,
**dadurch gekennzeichnet, daß** aus jeder Düse (23) die Druckluft (26) in Richtung eines Höhenbereichs der Vorrichtung (1) blasbar ist, in dem ein eine maximale Querdimension (42) aufweisender zylindrischer Teil (43) des Glasgegenstands (2) angeordnet ist.

7. Vorrichtung nach einem der Ansprüche 1 bis 6,
**dadurch gekennzeichnet, daß** das Basisteil (13) eine Tragschiene (34) mit waagerechter Längsachse (33) aufweist,
daß in der Tragschiene (34) mit der Druckluft beaufschlagbare Versorgungskanäle (39) ausgebildet sind,
daß die Versorgungskanäle (39) für jeden Schubfinger (14;16,17) je einen in einer oberen (44) und unteren Anschlußfläche (45) der Tragschiene (34) mündenden oberen (46) und unteren Stichkanal (47) aufweisen,
daß, je nach gewünschter Höhenlage der Düse (23), ein die Düse (23) tragendes Kupplungsstück (21) entweder mit der oberen (44) oder mit der unteren Anschlußfläche (45) gasdicht verbindbar ist,
und daß in jedem Kupplungsstück (21) ein Verbindungskanal (48) für die Druckluft ausgebildet ist, welcher Verbindungskanal (48) eine ständige Verbindung zwischen dem zugehörigen Stichkanal (46;47) und der Düse (23) schafft.

8. Vorrichtung nach Anspruch 7,
**dadurch gekennzeichnet, daß** der wenigstens eine Schubfinger (14;16,17) jeder Tasche (15) an dem zugehörigen Kupplungsstück (21) montiert ist.

9. Vorrichtung nach Anspruch 7 oder 8,
**dadurch gekennzeichnet, daß** jedes Kupplungsstück (21) in den Richtungen der Längsachse (33) der Tragschiene (34) relativ zu der Tragschiene (34) einstellbar ist.

## Claims

1. Apparatus (1) for pushing at least one hollow glass article (2) from a dead plate (3) of a glass forming machine along a curved path (4) onto a conveyor belt (5),
comprising a pusher (12) which comprises a base portion (13) and for each glass article (2) to be pushed at least one thrust finger (14; 16, 17) extending transversely from the base portion (13),
wherein each thrust finger (14; 16, 17) with the base portion (13) defines a pocket (15) to receive the glass article (2),
wherein the pusher (12) includes a nozzle (23) for each pocket (15),
and wherein from each nozzle (23) compressed air (26) can be blown such that a reduced pressure which draws the glass article (2) into the pocket (15) is created between the pusher (12) and the glass article (2),
**characterised in that** each nozzle (23) is arranged in the region of a corner (22), which is formed between the thrust finger (14; 16, 17) and the base portion (13), of the associated pocket (15),
and that the compressed air (26) can be blown from this corner (22) out between the base portion (13) and the glass article (2).

2. Apparatus according to claim 1, **characterised in that** the nozzle (23) is mounted on the base portion (13).

3. Apparatus according to claim 1 or 2, **characterised in that** the nozzle (23) can be mounted at different heights on the pusher (12) in dependence upon the axial length of the glass articles (2).

4. Apparatus according to one of claims 1 to 3, **characterised in that** the compressed air (26) is blown at an angle downwards from each nozzle (23).

5. Apparatus according to one of claims 1 to 4, **characterised in that** the compressed air (26) can be blown out from each nozzle (23) at least approximately parallel to the base portion (13).

6. Apparatus according to one of claims 1 to 5, **characterised in that** the compressed air (26) can be blown from each nozzle (23) in the direction of a height region of the apparatus (1), in which is disposed a cylindrical part (43) of the glass article (2) which has a maximum transverse dimension (42).

7. Apparatus according to one of claims 1 to 6, **characterised in that** the base portion (13) includes a carrier rail (34) having a horizontal longitudinal axis (33),
that supply channels (39) are formed in the carrier rail (34) and are arranged to carry the compressed air,
that the supply channels (39) for each thrust finger (14; 16, 17) each include an upper cross-passage (46) and a lower cross-passage (47) issuing respectively at an upper contact surface (44) and at a lower contact surface (45) of the carrier rail (34),
that, depending upon the desired height level of the nozzle (23), a coupling member (21) carrying the nozzle (23) can be connected in gas-tight manner either with the upper contact surface (44) or with the lower contact surface (45),
and that in each coupling member (21) there is provided a connecting passage (48) for the compressed air, said connecting passage (48) creating a permanent connection between the associated cross-passage (46; 47) and the nozzle (23).

8. Apparatus according to claim 7, **characterised in that** said at least one thrust finger (14; 16, 17) of each pocket (15) is mounted on the associated coupling member (21).

9. Apparatus according to claim 7 or 8, **characterised in that** each coupling member (21) can be adjusted relative to the carrier rail (34) in the directions of the longitudinal axis (33) of the carrier rail (34).

## Revendications

1. Dispositif (1) destiné au transfert d'au moins un objet creux en verre (2) d'une plaque de dépose (3) d'une machine de formage de verre sur une bande transporteuse (5) le long d'une voie courbe (4),
avec un registre de transfert (12) comportant un élément de base (13) et, pour chaque objet en verre (2) à transférer, au moins un doigt de poussée (14 ; 16, 17) s'étendant transversalement à partir de l'élément de base (13),
chaque doigt de poussée (14 ; 16, 17) définissant avec l'élément de base (13) une poche (15) pour la réception de l'objet en verre (2),
le registre de transfert (12) comportant une buse (23) pour chaque poche (15),
et de l'air comprimé (26) pouvant être soufflé à partir de chaque buse (23) de telle sorte qu'une dépression tirant l'objet en verre (2) dans la poche (15) soit engendrée entre le registre de transfert (12) et l'objet en verre (2),
**caractérisé en ce que** chaque buse (23) est disposée dans la zone d'un angle (22) de la poche (15) associée formé entre le doigt de poussée (14 ; 16, 17) et l'élément de base (13),
et **en ce que** l'air comprimé (26) peut être soufflé à partir de cet angle (22) entre l'élément de base (13) et l'objet en verre (2).

2. Dispositif selon la revendication 1,
**caractérisé en ce que** la buse (23) est montée sur l'élément de base (13).

3. Dispositif selon la revendication 1 ou 2,
**caractérisé en ce que**, en fonction de la longueur axiale de l'objet en verre (2), la buse (23) peut être montée à différentes hauteurs du registre de transfert (12).

4. Dispositif selon l'une quelconque des revendications 1 à 3,
**caractérisé en ce que** l'air comprimé (26) peut être soufflé obliquement vers le bas à partir de chaque buse (23).

5. Dispositif selon l'une quelconque des revendications 1 à 4,
**caractérisé en ce que** l'air comprimé (26) peut être soufflé à partir de chaque buse (23), au moins approximativement, parallèlement à l'élément de base (13).

6. Dispositif selon l'une quelconque des revendications 1 à 5,
**caractérisé en ce que** l'air comprimé (26) peut être soufflé à partir de chaque buse (23) en direction d'une zone de hauteur du dispositif (1), dans laquelle est disposée une partie cylindrique (43) de l'objet en verre (2) d'une dimension transversale maximale (42).

7. Dispositif selon l'une quelconque des revendications 1 à 6,
**caractérisé en ce que** l'élément de base (13) comporte un rail porteur (34) à axe longitudinal horizontal (33),
**en ce que** des canaux d'alimentation (39) pouvant être alimentés en air comprimé sont pratiqués dans le rail porteur (34),
**en ce que** les canaux d'alimentation (39) comportent pour chaque doigt de poussée (14 ; 16, 17) un canal de dérivation supérieur (46) et un canal de dérivation inférieur (47), qui débouchent dans une surface de raccordement supérieure (44) et dans une surface de raccordement inférieure (45) du rail porteur (34),
**en ce que**, en fonction de la position en hauteur souhaitée de la buse (23), un élément d'accouplement (21) portant la buse (23) peut être relié de façon étanche aux gaz, soit à la surface de raccordement supérieure (44), soit à la surface de raccordement inférieure (45),
et **en ce qu'**un canal de liaison (48) pour l'air comprimé est pratiqué dans chaque élément d'accouplement (21), lequel canal de liaison (48) crée une liaison permanente entre le canal de dérivation (46 ; 47) associé et la buse (23).

8. Dispositif selon la revendication 7,
**caractérisé en ce que** le doigt de poussée (14 ; 16, 17) au moins de chaque poche (15) est monté sur l'élément d'accouplement (21) associé.

9. Dispositif selon la revendication 7 ou 8,
**caractérisé en ce que** chaque élément d'accouplement (21) peut être réglé par rapport au rail porteur (34) dans les sens de l'axe longitudinal (33) du rail porteur (34).
